# EUROPEAN PATENT SPECIFICATION

(11) **EP 2 746 199 B1**
(45) Date of publication and mention of the grant of the patent: **22.10.2014**
(21) Application number: 13194562.8
(22) Date of filing: 27.11.2013
(51) Int. Cl.: B65G 23/08, B65G 13/073

(54) **A motorised roller**
Angetriebene Rolle
Rouleau motorisé

(30) Priority: 20.12.2012 IT MO20120316
(43) Date of publication of application: 25.06.2014
(73) Proprietor: Motor Power Company S.r.l., 42024 Castelnovo Sotto (RE) (IT)
(72) Inventor: Mignano, Paolo, 42015 CORREGGIO (REGGIO EMILIA) (IT)
(74) Representative: Paparo, Aldo

(56) References cited:
- EP-A2- 1 432 104
- DE-A1-102006 049 327
- US-B1- 6 710 505

## Description

The present invention relates to a motorised roller.

In particular, the motorised roller or rotating roller of the present invention is usable in all the sectors and/or applications where counter-rotating rollers are used in velocity and/or a couple as rotary presses, labelling systems, movement systems for roller units and conveyor belts used in the logistics sector.

A motorised roller is made up of a synchronous motor with permanent magnets where the stator is constituted by the winding part and the rotor is realized by permanent magnets arranged about the stator.

In particular, the stator is in a shaft form, located centrally along the motorised roller axis, while the rotor is a cover or cylindrical tube, defining the external body of the motorised roller, arranged about the stator.

At present, in the logistic sector motorised rollers having a mechanical gear reducer or direct drive are used for moving roller units or conveyor belts.

The majority of the motorised rollers are mechanically reduced, while a small part are directly driven. US 6 710 505 B1 discloses such a roller, according to the preamble of claim 1.

This kind of rollers exhibit the drawback of having the stator part, and therefore the shaft about which the coil is housed, directly coupled to the external support system: this direct contact between the stator and the mechanical external support structure can cause problems of alignment and functioning in the motorised roller.

In fact, the motorised rollers for logistical use have, given a same diameter, variable lengths for adapting to the various widths of the conveyor belts. The length of the motorised roller constitutes the arm of the torque couple which acts on the shaft connecting the motorised roller to the external mechanical structure, and the length of this arm, associated to determined forces reported in the following, generates high value couples with respect to the mechanical structure of the motor.

These forces are generated, for example, by the load transported on the motorised roller, by stresses acting on the flanks by external agents, by the force exerted by the operator during the mounting of the motorised roller in the transport system, by a wrong mounting position of the motorised roller internally of the conveyor belt or possibly by a wrong alignment, or imperfect parallel positioning, of the flanks of the fixing system according to the specifications.

All of these stresses influence the position of the stator internally of the motorised roller, causing a variation in distance between the stator and the rotor, or even contact between the two components, with consequent damage and breakage of the motorised roller.

The conveyors and relative fixing systems do not have a defined standard, so it is necessary to be able to render the motor immune from this type of damage, independently of the type of conveyor internally of which they are mounted.

The aim of the present invention is to obviate the drawbacks encountered in the prior art.

In particular, an aim of the present invention is to realize a motorised roller able to prevent damage or breakage of the motor in the ways described in the foregoing, independently of the mechanical system used for the mounting.

Further, an aim of the present invention is to provide a motorised roller which is more resilient to the stresses that happen in normal use.

Lastly, an aim of the present invention is to realize a motorised roller with direct drive which is installable on various systems of logistics transport, without the need to apply external mechanical adapters for the protection of the motorised roller, so as to make the product highly marketable and flexible.

Further characteristics and advantages of the present invention will more fully emerge from the non-limiting indicative description of a preferred but not exclusive embodiment of a motorised roller, as illustrated in the accompanying figures, in which:
figure 1 is a partial view of a section of a motorised roller according to the present invention, in a first embodiment thereof;
figure 2 is a partial and sectioned view of a motorised roller according to the present invention, in a second embodiment thereof;
figure 3 is a partial and sectioned view of a motorised roller according to the present invention, in a third embodiment thereof.

Reference numeral 1 denotes in its entirety a motorised roller, preferably a motorised roller with direct drive.

These motorised rollers are preferably used in the logistics sector in order to form the conveying surface of straight roller conveyors, or in labelling systems, in the printing sector internally of rotary presses or in general in sectors where the presence of a rotating roller is required to activate and advance the production lines.

The motorised roller 1 is substantially cylindrical and comprises, internally thereof, an asynchronous electric motor with permanent magnets, in which a stator 2 is present, constituted by windings, and a rotor 3 comprising the permanent magnets.

Differently to normal synchronous motors with permanent magnets, in this case the stator 2, on which the windings of the supply circuit are present, is solidly constrained to a central shaft 12 that is internal of the motorised roller 1, arranged along the axis 2a of the motorised roller, while the rotor 3, to which are associated various magnetic poles of alternating polarity created by permanent magnets, is rotatable about the shaft 12 of the stator 2.

In particular, the rotor 3 comprises a cylindrical tube or cover 13 which constitutes the external cylindrical covering of the motorised roller 1.

The cover, made of a metal material such as for example aluminium or galvanised steel, can exhibit various surface finishings, in response to particular use requirements.

The motorised roller 1 exhibits a first 1a and a second 1b end at which respectively a first head 4 and a second head 5 are present, each of which is mounted idle on the shaft of the stator 2, by means of precision bearings 6, preferably oil-sealed cage bearings.

The cover of the rotor 3 is solidly constrained to the heads 4, 5 and rotates therewith about the axis 2a.

A housing compartment 7 is present in particular internally of the first head 4, in particular internally of the shaft of the stator 2 in an axial direction, the housing compartment 7 being for a fixing pin of the motorised roller 1 to the support structure 10 of the conveyor.

The second head 5, on the other hand, supports a fixing shaft 8 for constraining the motorised roller 1 to the support structure 10 of the conveyor, which partly exits from the motorised roller 1 in an axial direction.

The cables 11 electrically supplying the motorised roller 1 pass through the fixing shaft 8, preferably passing through the centre thereof and then through the axis 2a of the motorised roller 1.

The shaft of the stator 2 is connected to the fixing shaft 8 via a connector 9.

Both the fixing shaft 8 and the connector 9 are made of a metal material.

In particular, the stator 2 exhibits an end 2' connected to the connector 9, preferably friction-inserted in the connector 9.

The motorised roller 1 comprises an elastic joint 14 interposed between the central shaft 12 of the stator 2 and the fixing shaft 8, which enables a relative decoupling movement between the fixing shaft 8 and the stator 2. The joint 14 is preferably made of a polymer material.

In particular, the elastic joint 14 is coupled to the connector 9.

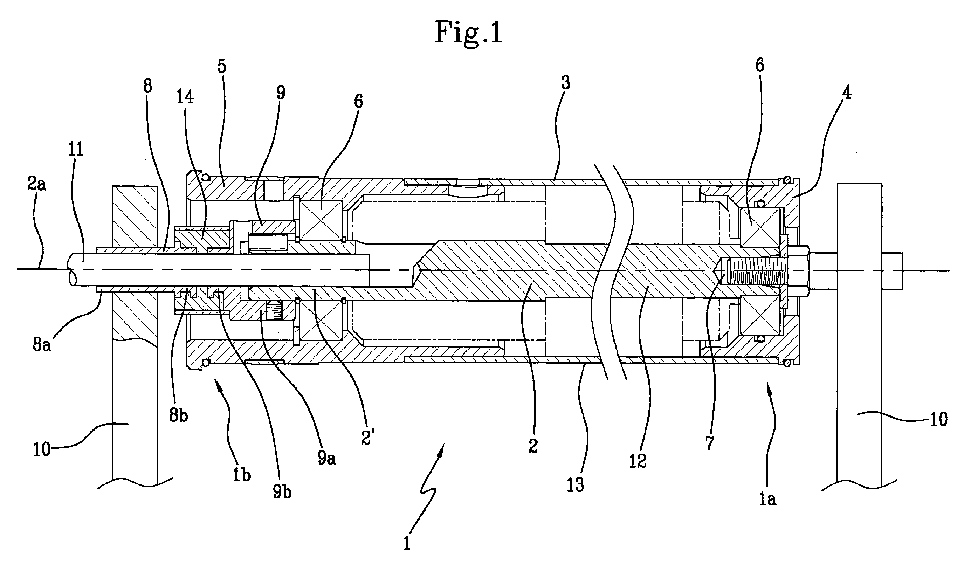

As visible in figure 1, in a first embodiment the joint 14 is interposed between the fixing shaft 8 and the connector 9 and is also coaxial to both; therefore the connector 9 and the fixing shaft 8 exhibit a relative end inserted in the elastic joint 14.

In other words, again with reference to the first embodiment of figure 1, the fixing shaft 8 exhibits a first free end 8a insertable in a support structure 10 of a roller conveyor, and a second end 8b inserted in the elastic joint 14, and the connector 9 exhibits a first end 9a associated to the stator 2 and a second end 9b inserted in the joint 14.

Therefore, as illustrated in figure 1, the shaft 12 of the stator 2 is inserted in the connector 9, which is in turn coupled, via the elastic joint 14, to the fixing shaft 8; in this way the external stresses unload directly on the fixing shaft 8, which can incline because of the elastic joint 14 without deforming the connector 9 and consequently without deforming the shaft 12 of the stator 2.

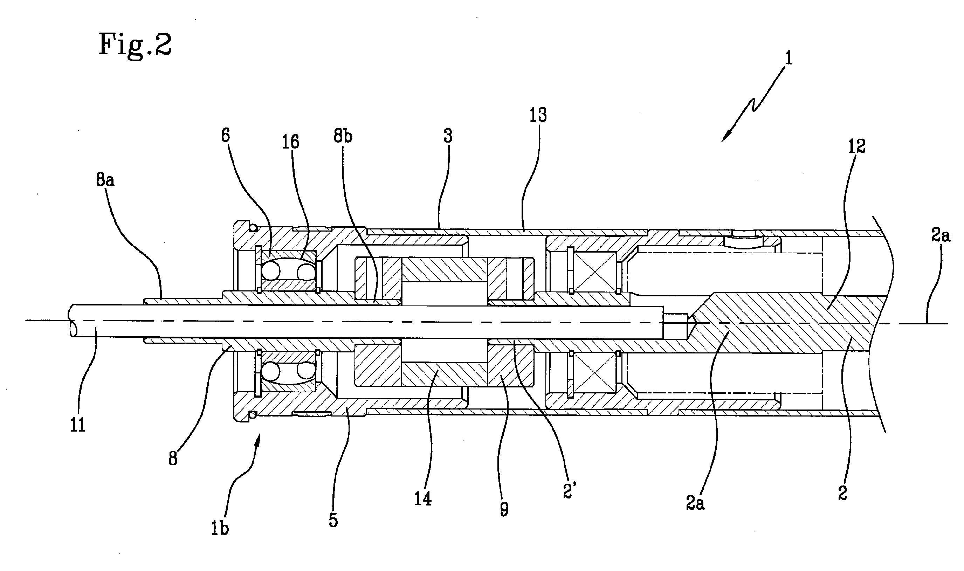

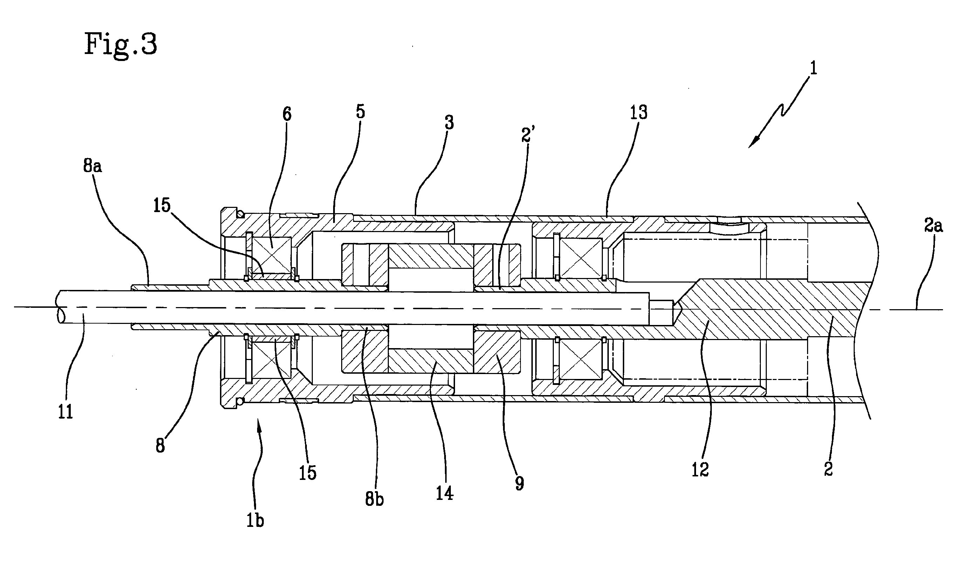

In accordance with a second and a third embodiment, illustrated respectively in figures 2 and 3, the connector 9 is interposed between the fixing shaft 8 and the shaft 12 of the stator 2 and is connected directly to both.

In fact, the fixing shaft 8 exhibits a first free end 8a insertable in a support structure 10 of a roller conveyor, and a second end 8b inserted in the connector 9, and the stator 2 exhibits an end 2' thereof inserted in the connector 9.

In this case the elastic joint 14 is contained internally of the connector 9. With specific reference to the second embodiment of figure 2, the precision bearing 6, which connects the second head 5 of the motor to the fixing shaft 8, is an orientable bearing 16, i.e. which enables the head 5 of the motor to perform slight oscillating movements about the axis 2a without affecting the alignment of the motorised roller 1.

The orientable joint 16 is coaxial to the fixing shaft 8, located between the fixing shaft 8 and the second head 5 of the motor.

The relative decoupling movement between the shaft 12 of the stator 2 and the fixing shaft 8 is obtained by means of the action of the orientable bearing 16, solicited by the fixing shaft 8, combined with the elasticity of the joint 14, to which the shaft 12 of the stator 2 is coupled by means of the connector 9.

With specific reference to the third embodiment of figure 3, the motorised roller 1 further comprises an elastic annular joint 15, located below the precision bearing 6 interposed between the fixing shaft 8 and the motor head 5.

The relative decoupling movement between the shaft 12 of the stator 2 and the fixing shaft 8 is obtained by means of the action of the fixing shaft 8 on the connecting bearing 6 between the fixing shaft 8 and the head 5 of the motor via the elastic annular joint 15, combined with the elasticity of the elastic joint 14, to which the shaft 12 of the stator 2 is coupled via the connector 9.

Independently of the embodiment used, the elastic joint interposed between the fixing shaft and the stator shaft realises a system that is able to neutralise both the dynamic stresses and the static stresses, thus allowing the motorised roller to function equally even in the case where the fixing shaft is not aligned, and therefore not in axis with the other end of the motorised roller.

The external stresses, in fact, unload directly on the fixing shaft which can incline, because of the elastic joint, without deforming the connector and consequently the shaft of the stator.

The presence of the elastic joint enables obtaining further advantages, no less important, such as, for example, the reduction of the vibrations and the noisiness of the system, due to the absorption of the vibrations by the elastic joint.

## Claims

1. A motorised roller comprising a central shaft (12) defining a stator (2) arranged axially and exhibiting a plurality of windings, a cylindrical cover (13) defining a rotor (3) arranged about the stator (2) and exhibiting a plurality of permanent magnets, at least a fixing shaft (8) projecting axially from an end (1b) of said motorised roller (1), in order to constrain said motorised roller (1) to an external support structure (10), a connector (9) for connecting said stator (2) to said fixing shaft (8), **characterised in that** it comprises an elastic joint (14) interposed between said stator (2) and said fixing shaft (8) which enables a relative decoupling movement between said fixing shaft (8) and said stator (2).

2. The motorised roller according to claim 1, **characterised in that** said elastic joint (14) is made of a polymer material.

3. The motorised roller according to one of the preceding claims, **characterised in that** said fixing shaft (8) and said connector (9) are made of metal.

4. The motorised roller according to one of the preceding claims, **characterised in that** said stator (2) exhibits an end (2') connected to said connector (9).

5. The motorised roller according to one of the preceding claims, **characterised in that** said fixing shaft (8) exhibits a first free end (8a) and a second end (8b) inserted in said elastic joint (14).

6. The motorised roller according to one of the preceding claims from 1 to 4, **characterised in that** said fixing shaft (8) exhibits a first free end (8a) and a second end (8b) inserted in said connector (9).

7. The motorised roller according to one of the preceding claims, **characterised in that** it comprises a first (4) and a second (5) motor head, located at ends (1a, 1b) of said motorised roller (1) and rotatable solidly with said rotor (3).

8. The motorised roller according to the preceding claim, **characterised in that** said elastic joint (14) is contained in said connector (9).

9. The motorised roller according to the preceding claim, **characterised in that** it comprises an orientable bearing (16) located below the second head (5) of the motor about said fixing shaft (8) which cooperates with said elastic joint (14) in order to enable a relative decoupling movement between said fixing shaft (8) and said stator (2).

10. The motorised roller according to claim 8, **characterised in that** it comprises an elastic annular joint (15) located coaxially about said fixing shaft (8), below a bearing (6) for connecting the fixing shaft (8) and a motor head (5); said elastic annular joint (15) cooperating with said elastic joint (14) in order to enable a relative decoupling movement between said fixing shaft (8) and said shaft (12) of the stator (2).

## Patentansprüche

1. Angetriebene Rolle, umfassend eine mittige Welle (12), definierend einen Stator (2), axial angeordnet und aufweisend eine Vielzahl an Wicklungen, eine zylindrische Abdeckung (13), definierend einen Rotor (3), angeordnet um den Stator (2) und aufweisend eine Vielzahl an Permanentmagneten, mindestens eine fixierende Welle (8), hervortretend axial aus einem Ende (1b) der angetriebenen Rolle (1), um die angetriebene Rolle (1) an einem externen Haltegestell (10) zu befestigen, einen Verbinder (9) für die Verbindung des Stators (2) mit der fixierenden Welle (8), **dadurch gekennzeichnet, dass** sie ein elastisches Anschlussstück (14) aufweist, eingesetzt zwischen dem Stator (2) und der fixierenden Welle (8), das eine relative Entkupplungsbewegung zwischen der fixierenden Welle (8) und dem Stator (2) ermöglicht.

2. Angetriebene Rolle nach Anspruch 1, **dadurch gekennzeichnet, dass** das elastische Anschlussstück (14) aus Polymermaterial besteht.

3. Angetriebene Rolle nach einem der vorhergehenden Ansprüche, **dadurch gekennzeichnet, dass** die fixierende Welle (8) und der Verbinder (9) aus Metall bestehen.

4. Angetriebene Rolle nach einem der vorhergehenden Ansprüche, **dadurch gekennzeichnet, dass** der Stator (2) ein Ende (2') aufweist, das mit dem Verbinder (9) verbunden ist.

5. Angetriebene Rolle nach einem der vorhergehenden Ansprüche, **dadurch gekennzeichnet, dass** die fixierende Welle (8) ein erstes freies Ende (8a) und ein zweites Ende (8b), eingesetzt in das elastische Anschlussstück (14), aufweist.

6. Angetriebene Rolle nach einem der Ansprüche 1 bis 4, **dadurch gekennzeichnet, dass** die fixierende Welle (8) ein erstes freies Ende (8a) und ein zweites Ende (8b) aufweist, eingesetzt in den Verbinder (9).

7. Angetriebene Rolle nach einem der vorhergehenden Ansprüche, **dadurch gekennzeichnet, dass** sie einen ersten (4) und einen zweiten (5) Motorkopf umfasst, platziert an Enden (1a, 1b) der angetriebenen Rolle (1) und drehbar fest mit dem Rotor (3) verbunden.

8. Angetriebene Rolle nach dem vorhergehenden Anspruch, **dadurch gekennzeichnet, dass** das elastische Anschlussstück (14) im Verbinder (9) enthalten ist.

9. Angetriebene Rolle nach dem vorhergehenden Anspruch, **dadurch gekennzeichnet, dass** sie ein verstellbares Lager (16) umfasst, platziert unter dem zweiten Kopf (5) des Motors um die fixierende Welle (8), das mit dem elastischen Anschlussstück (14) kooperiert, um eine relative Entkupplungsbewegung zwischen der fixierenden Welle (8) und dem Stator (2) zu ermöglichen.

10. Angetriebene Rolle nach Anspruch 8, **dadurch gekennzeichnet, dass** sie ein elastisches ringförmiges Anschlussstück (15) umfasst, platziert gleichachsig um die fixierende Welle (8) unter einem Lager (6) zur Verbindung der fixierenden Welle (8) mit einem Motorkopf (5), wobei das elastische ringförmige Anschlussstück (15) mit dem elastischen Anschlussstück (14) kooperiert, um eine relative Entkupplungsbewegung zwischen der fixierenden Welle (8) und der Welle (12) des Stators (2) zu ermöglichen.

## Revendications

1. Rouleau motorisé comprenant un arbre central (12) définissant un stator (2) disposé axialement et présentant une pluralité d'enroulements, un manchon cylindrique (13) définissant un rotor (3) disposé autour du stator (2) et présentant une pluralité d'aimants permanents, au moins un arbre de fixation (8) dépassant axialement d'une extrémité (1b) dudit rouleau motorisé (1) afin de fixer ledit rouleau motorisé (1) à une structure de support externe (10), un raccord (9) servant à raccorder ledit stator (2) au dit arbre de fixation (8), **caractérisé en ce qu'**il comprend un joint élastique (14), interposé entre ledit stator (2) et ledit arbre de fixation (8), permettant un mouvement de découplage correspondant entre ledit arbre de fixation (8) et ledit stator (2).

2. Rouleau motorisé selon la revendication 1, **caractérisé en ce que** ledit joint élastique (14) est un polymère.

3. Rouleau motorisé selon l'une des revendications précédentes, **caractérisé en ce que** ledit arbre de fixation (8) et ledit raccord (9) sont en métal.

4. Rouleau motorisé selon l'une des revendications précédentes, **caractérisé en ce que** ledit stator (2) présente une extrémité (2') reliée au dit raccord (9).

5. Rouleau motorisé selon l'une des revendications précédentes, **caractérisé en ce que** ledit arbre de fixation (8) présente une première extrémité libre (8a) ainsi qu'une seconde extrémité (8b) insérée dans ledit joint élastique (14).

6. Rouleau motorisé selon l'une des revendications précédentes de 1 à 4, **caractérisé en ce que** ledit arbre de fixation (8) présente une première extrémité libre (8a) ainsi qu'une seconde extrémité (8b) insérée dans ledit raccord (9).

7. Rouleau motorisé selon l'une des revendications précédentes, **caractérisé en ce qu'**il comprend une première (4) et une seconde (5) tête moteur, situées aux extrémités (1a, 1b) dudit rouleau motorisé (1) et pouvant solidairement pivoter avec ledit rotor (3).

8. Rouleau motorisé selon la revendication précédente, **caractérisé en ce que** ledit joint élastique (14) est contenu dans ledit raccord (9).

9. Rouleau motorisé selon la revendication précédente, **caractérisé en ce qu'**il comprend un coussinet orientable (16) situé en dessous de la seconde tête (5) du moteur autour dudit arbre de fixation (8) qui coopère avec ledit joint élastique (14) afin de permettre un mouvement de découplage correspondant entre ledit arbre de fixation (8) et ledit stator (2).

10. Rouleau motorisé selon la revendication 8, **caractérisé en ce qu'**il comprend un joint annulaire élastique (15) situé coaxialement autour dudit arbre de de fixation (8) en dessous d'un coussinet (6) pour relier l'arbre de fixation (8) et une tête moteur (5) ; ledit joint annulaire élastique (15) coopérant avec ledit joint élastique (14) afin de permettre un mouvement de découplage correspondant entre ledit arbre de fixation (8) et ledit arbre (12) du stator (2).
